# EUROPÄISCHE PATENTSCHRIFT

(11) **EP 0 649 124 B1**
(45) Veröffentlichungstag und Bekanntmachung des Hinweises auf die Patenterteilung: **09.12.1998**
(21) Anmeldenummer: 94115052.6
(22) Anmeldetag: 23.09.1994
(51) Int. Cl.: G08G 1/017, B60R 25/00, H01F 41/02, G03H 1/02

(54) **Kennzeichnung von Fahrzeugen zur Erschwerung von Diebstahl und oder unbefugter Veräusserung**
Marking of vehicles for impeding theft or unauthorized sale
Marquage de véhicules pour rendre difficile le vol ou la vente non autorisée

(30) Priorität: 16.10.1993 DE 4335308
(43) Veröffentlichungstag der Anmeldung: 19.04.1995
(73) Patentinhaber: DAIMLER-BENZ AKTIENGESELLSCHAFT, 70567 Stuttgart (DE)
(72) Erfinder: Abersfelder, Günter, Dr., D-71065 Sindelfingen (DE); Hahn, Stefan, D-70770 Denkendorf (DE); Uhl, Stefan, D-70597 Stuttgart (DE); Degen, Winfried, D-73728 Esslingen (DE)

(56) Entgegenhaltungen:
- EP-A- 0 040 839
- DE-A- 3 445 401
- US-A- 3 861 886
- US-A- 4 243 734
- US-A- 4 606 927
- US-A- 5 083 814

## Beschreibung

Die Erfindung betrifft ein Verfahren zur Kennzeichnung von Fahrzeugen zur Erschwerung von Diebstahl oder unbefugter Veräußerung gemäß dem Oberbegriffe des Patentanspruches 1 bzw. 2.

Ein gattungsgemäßes Verfahren ist aus der DE-OS 34 45 401 bekannt. Dort wird unter einer Lack-, Farb- oder Unterbodenschutzschicht am Fahrzeug eine Kennzeichnung angebracht, welche auf eine einfallende Strahlung bestimmter Wellenlänge reflektierend wirkt. Die Kennzeichnung ist als Strichkode ausgebildet, der sich über das Fahrzeug in Richtung dessen Längsachse erstreckt und in dem Fahrzeugdaten verschlüsselt sind. Mit geeigneten Strahlungssendern und -empfänger können Fahrzeuge auch während des Fahrens abgetastet und zur Überprüfung der Fahrzeugidentität mit fälschungssicher abgelegten spezifischen Fahrzeugdaten verglichen werden, so daß aufgrund der für autorisierte Personen erleichterten Auffindbarkeit des Fahrzeuges die Diebstahlgefahr verringert werden kann.

Für einen Autodiebstahl ist die Erschwerung der Erkennbarkeit dieser Kennzeichnung durch Verbergen hinter Lackschichten jedoch bei der heutigen Professionalität der einschlägigen Kreise aufgrund der zur Verfügung stehenden Mittel kein Hindernis mehr. Der Aufwand für eine Veränderung des Kennzeichens ist zwar hoch, wird jedoch desto mehr in Kauf genommen, je höher der mit dem Fahrzeug erzielbare Gewinn bei einer Veräußerung ist.

Darüber hinaus ist es schon bei geringer Beschädigung der Karosserie sehr schwierig, den darauf aufgebrachten Strichcode einwandfrei zu lesen, so daß der Fahrer ohne eine Straftat begangen zu haben bei einer Fahrzeugkontrolle diebstahlverdächtig werden würde. Des weiteren läßt sich bei Behebung der Beschädigung ein und derselbe oder ein neuer Strichcode nur unter großem technischem, finanziellem und verwaltungstechnischem Aufwand für den Fahrzeugbesitzer wieder auftragen.

Aus der US 4,243,734 ist die Aufbringung einer Vielzahl von kleinsten Teilchen auf einen Artikel mittels einer Trägerflüssigkeit bekannt. Die Teilchen werden dabei in Form von Mikropunkten ausgebildet, die aus einem Filmstreifen eines photographischen Filmes herausgeschnitten werden. Diese Mikropunkte beinhalten Identifikationsangaben, die auf dem Film in vielfacher Anzahl verkleinert aufgenommen sind. Die Trägerflüssigkeit wird hierbei als Auftragungsmittel aus rein praktischen Gründen dazu benutzt, die Teilchen auf dem Artikel zu verteilen und durch Adhäsion oder Verklebung an ihm haftbar zu machen, und ist dabei kein Bestandteil des Artikels, der diesen Bestandteil aus Haltbarkeitsgründen notwendigerweise enthalten müßte.

Der Erfindung liegt die Aufgabe zugrunde, eine gattungsgemäßes Verfahren derart weiterzugestalten, daß ein jederzeit zuverlässiger Fälschungsschutz der Fahrzeugidentität erreicht wird.

Die Aufgabe ist erfindungsgemäß durch die Merkmale des Patentanspruches 1 bzw. des Patentanspruches 2 gelöst.

Dank der Erfindung bleiben trotz einer Neubeschichtung aufgrund der mikrofeinen Ausbildung der Informationsträger und ihrer massenhaften Verteilung in einer Fahrzeugbeschichtung immer noch genügend Stellen mit Daten am Fahrzeug, die die ursprüngliche Identität wiedergeben können. Bei einer Überprüfung des Fahrzeuges in einer Fahrzeugkontrolle ist somit die Gefahr des Erkennens der unbefugten Benutzung bzw. der Unrechtmäßigkeit des Besitzes aufgrund der Nachweisbarkeit einer Abweichung der Sekundär- von den Primärinformationen relativ hoch.

Das erfindungsgemäße kennzeichnende Verfahren bietet wegen der hohen technologischen Anforderungen und Voraussetzungen zur Herstellung der Informationsträger und der dadurch erschwerten Nachahmung zusätzlichen Fälschungsschutz. So ergeben sich bei der Nachahmung mit billigeren, technologisch tieferstehenden Mitteln Abweichungen in der Ausbildung der Informationsträger und ihrer Aufbringung, die als Manipulationen der ursprünglichen Identität erkannt werden können.

Bei Bekanntwerden der Verwendung einer derartigen Kennzeichnung des Fahrzeuges wird ein Abschreckungseffekt vor einer Veränderung der Identität der mit der Kennzeichnung versehenen Fahrzeuge erzielt, so daß insgesamt ein jederzeit zuverlässiger Fälschungsschutz der Identität und somit ein Schutz vor Diebstahl oder unbefugter Veräußerung gegeben ist. Für preislich auf hohem oder höchstem Niveau gelegene Fahrzeuge, die aufgrund der hohen Diebstahlgefahr nicht mehr vollkaskoversichert werden, können mit einer derartigen fälschungssicheren Kennzeichnung versicherungsseitig Versicherungsverträge wieder in Betracht gezogen werden.

Desweiteren verhindert die aus dem erfindungsgemäßen Verfahren resultierende Kennzeichnung des Fahrzeuges eine Fahrerflucht bei Unfällen, bei denen Schürfspuren des Fahrzeuges am Unfallort verbleiben, da die Ermittlungswahrscheinlichkeit sehr hoch ist. Dies kann bei allgemeiner öffentlicher Kenntnisnahme dieses Sachverhalts eine defensive vorsichtigere Fahrweise bei den Fahrern und dadurch eine Unfallverringerung zur Folge haben.

Zweckmäßige Ausgestaltungen der Erfindung können den Unteransprüchen entnommen werden; im übrigen ist in der nachfolgenden Zeichnungsbeschreibung ein Ausführungsbeispiel der Erfindung näher erläutert.

Es zeigt:

Fig. 1 in einer Schnittdarstellung einen Abschnitt einer Karosserieaußenhaut mit einem vergrößerten Ausschnitt der erfindungsgemäßen Kennzeichnung,

Fig. 2a-d in symbolhafter Darstellung vier wesentliche Verfahrensschritte zur erfindungsgemäßen Kennzeichnung.

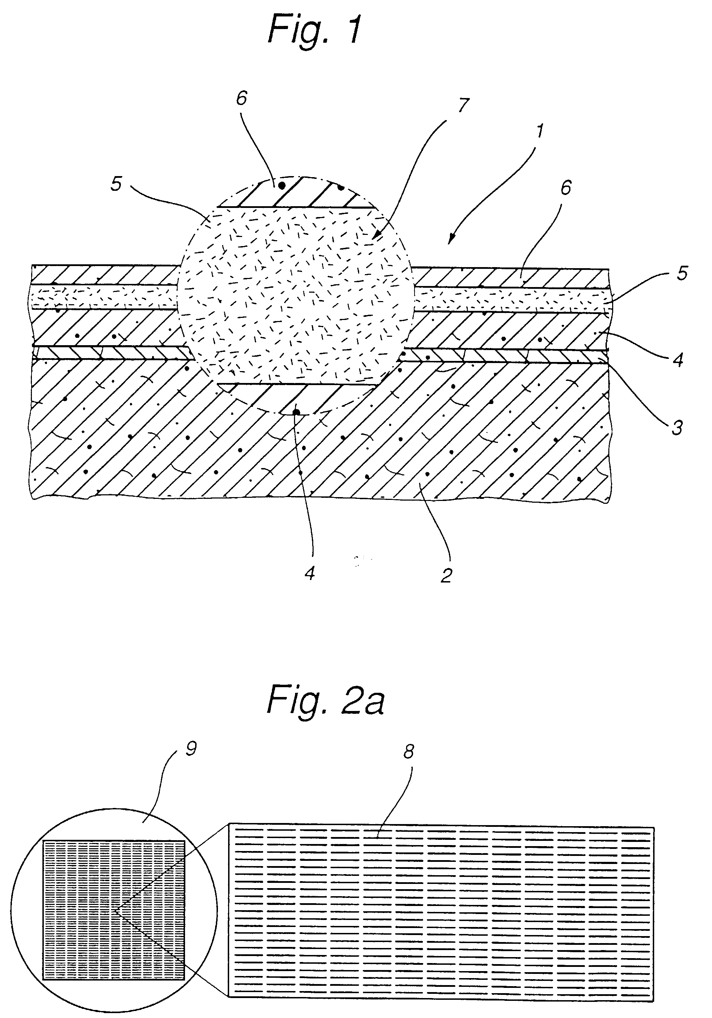

In Fig. 1 ist ein Abschnitt einer Fahrzeugaußenhaut 1 dargestellt, die sich aus einem Fahrzeugblech 2 und mehreren - nebst einer Phosphatierungsschicht 3 und einer Grundierungsschicht 4 - auf das Fahrzeugblech 2 aufgebrachten Lackschichten zusammensetzt, wobei hier beispielgebend nur zwei Lackschichten, eine Füller-Lackschicht 5 und eine Decklackschicht 6 aufgezeigt sind.

In der Füller-Lackschicht 5 sind mikroskopisch kleine, im µm-Bereich liegende gleichgestaltete Plättchen 7 in vieltausendfacher Anzahl farbpigmentartig eingelagert. Die Plättchen 7 dienen als Informationsträger für Sekundärinformationen, die charakteristische numerisch codierte Merkmale des Fahrzeuges wie beispielsweise die Fahrgestellnummer 8 oder Nummern für bestimmte Zubehörteile enthalten. Die Plättchen 7 sind als geprägte Abschnitte einer dünnen Aluminiumfolie 12 ausgebildet und sind über die gesamte Außenhaut 1 des Fahrzeuges verteilt. Sie können auch an ganz bestimmten Stellen lokalisiert sein, wobei deren Lage nur autorisierten Personen bekannt sein darf.

Desweiteren können die Plättchen 7 auch in der Innenlackierung, in der Decklackierung, in der Unterbodenschutzmasse und/oder dem Konservierungswachs der Hohlraumkonservierung eingebracht sein. Durch ihre große Menge in Verbindung mit ihrer winzigen Größe sind die Mikroplättchen 7 in ihrer Gesamtheit praktisch unentfernbar, so daß damit eine fälschungssichere Kennzeichnung von Fahrzeugen gegeben ist, die Diebstahl, unbefugte Veräußerung und unrechtmäßige Inbesitznahme erschweren.

Dabei werden bei einer Fahrzeugkontrolle entnommene Lackprobe die in den Plättchen 7 eingeprägten und unter einem Mikroskop ersichtlichen Informationen mit in einem zentralen Verkehrsregister inhaltlich niedergelegten Informationen (Primärinformationen) über die Identität des Fahrzeuges verglichen. Bei einer Abweichung der Sekundär- von den Primärinformationen ist dann der Verdacht auf unrechtmäßigen Fahrzeugbesitz gegeben.

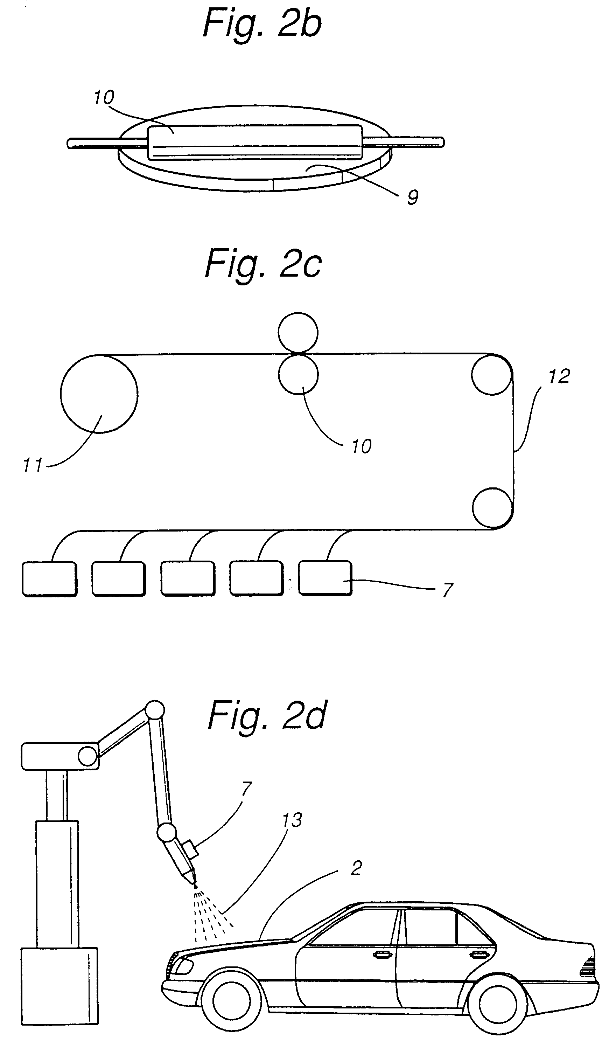

Zur Herstellung der mikrofeinen Informationsträger 7 wird gemäß Fig. 2a zuerst eine Vielfalt von Kopien von gleichen Fahrgestellnummern 8 auf einen Silizium-Wafer 9 mit einem Elektronenstrahl mikroskopisch klein geschrieben. Das Schriftbild des Wafers 9 wird dann auf eine Prägewalze 10 übertragen (Fig. 2b), mittels der eine von einem Coil 11 abwickelbare Aluminiumfolie 12 heißgeprägt wird (Fig. 2c). Anschließend wird die Folie 12 in die Mikroplättchen 7 zerschnitten, welche beim Lackierungsvorgang (Fig. 2d) dem Lack 13 zugemischt werden. Dabei ist es auch denkbar, die Auftragung der Mikroplättchen 7 in einem separaten sich an die Lackierung anschließenden Arbeitsgang erfolgen zu lassen. Die Informationen auf den Mikroplättchen bezüglich der Identität des Fahrzeuges können mittels einer Lupe bzw. eines Mikroskopes entnommen werden. Das Aufbringen der Mikrozeichen kann auch durch ein Ätzverfahren erreicht werden, wie es zur Herstellung von Halbleitermasken üblich ist.

Eine Alternative zu der oben beschriebenen Art der Informationsspeicherung auf Plättchen bildet die Aufbringung von photochromen Farbmolekülen, die sich durch Bestrahlen mit UV-Licht verfärben. Durch die Anordnung von gefärbten und ungefärbten Molekülen in einer bestimmten Reihenfolge wird somit eine Darstellung von Sekundärinformationen ermöglicht. Die Verfärbungsabfolge der Moleküle richtet sich nach einem Kode, dessen Dekodierung von unbefugter Seite - wenn überhaupt - nur mit äußerstem Aufwand möglich ist, was eine Fälschung der Identität des Fahrzeuges praktisch ausschließt. Die Moleküle können im übrigen auf Polymerplättchen aufgebracht werden, die durch ihre fehlende metallische Reflexion auch anderen Lacken als Metallic-Lacken zugemischt werden können, ohne den subjektiven Farbeindruck der Lackierung zu stören.

Desweiteren können die Polymerplättchen auch mit aneinandergereihten magnetisch ausgerichteten Teilchen beschichtet sein, in deren Ausrichtungsabfolge nach einem Kode die Sekundärinformationen gespeichert sind. Zur Herstellung wird eine großflächige Polymerfolie mit magnetischen Eindomänenteilchen beschichtet. Das beschichtete Trägermaterial wird anschließend mit einem Laser lokal erhitzt und gleichzeitig einem Magnetfeld ausgesetzt. Die Magnetteilchen sind dadurch verdrehbar und richten sich jeweils parallel zur Richtung des angelegten Magnetfeldes aus. Ohne Feld richten sich die Teilchen statistisch aus, so daß keine makroskopische Magnetisierung auftritt. Durch mehrmaliges Abschalten des Magnetfeldes läßt sich somit entlang einer Heizstrecke auf dem Trägermaterial ein magnetisches Bitmuster erstellen, das eine Spur bildet. Dabei wird jeder Spur in unmittelbarer Nähe eine Referenzspur zugeordnet, die zur Eindeutigkeit der Signalerkennung bei einer Detektion der Sekundärinformationen dient, da gerade in Umpolungsbereichen unerwünschte Richtungsänderungen schon ausgerichteter Teilchen auftreten können. Nach Erkalten und somit nach Verfestigung des Trägermaterials sind die ausgerichteten Teilchen sozusagen "eingefroren" , d.h. nicht mehr verdrehbar. Die Folie wird dann zu mikrofeinen Plättchen zerkleinert und dem Lack beigegeben. Auch hier kann ähnlich wie bei der Aufbringung der photochromen Moleküle aufgrund der hohen Speicherdichte und der damit nahezu unbegrenzten Kodegestaltungsmöglichkeiten eine Dekodierung von unbefugter Seite praktisch nicht erfolgen.

Als weitere Alternative können die Plättchen 7 als kleine Stückchen eines großflächigen wenige Atomlagen dicken, monochromatischen Hologrammes ausgebildet sein, in dem die Sekundärinformationen mit der üblichen holographischen Technik aufgenommen sind. Trotz der Zerstückelung der Folie weist jedes kleine Stückchen für sich die ganze in der gesamten Folie gespeicherte Information auf. Die holographische Methode der Informationsspeicherung benötigt einen vergleichsweise geringen Herstellungsaufwand. Photochemische, transparente Polymerfolien bzw. Folienstückchen mit Infrarot- oder UV-Hologrammen sind aufgrund ihrer Farblosigkeit im sichtbaren Spektralbereich in der Klarlackschicht ohne Veränderung der jeweiligen Lackfarbe einbringbar, so daß die Sekundärinformationen bei einer Fahrzeugkontrolle lediglich durch Bestrahlen mit dem bei der Aufnahme verwandten Referenzlaserlicht direkt vor Ort lesbar sind.

Schließlich können die Informationsträger auch Peptidketten sein, die aus mehreren gleichartigen und/oder voneinander verschiedenen Aminosäuren oder Aminosäurederivaten aufgebaut sind und dem Lack oder einer anderen Fahrzeugbeschichtung beigemischt werden können. Mit Variierung der Aminosäurenart und deren Lage in der Peptidkette bei der Herstellung und durch die gleichzeitige Verwendung unterschiedlicher Peptidketten wird eine Speicherung von ausreichend vielen Sekundärinformationen zur eindeutigen Erkennung der Identität des Fahrzeuges möglich. Eine Dekodierung der Abfolge der Peptidkettenbausteine in den verschiedenen Peptidketten ist dabei gleichwohl aufgrund der Vielfalt der Möglichkeiten ohne Kodeschlüssel nur sehr schwer möglich, so daß eine sehr hohe Fälschungssicherheit des Fahrzeuges gegeben ist. Auch hier tritt keine Verfärbung der aufgebrachten Lackfarbe auf.

## Patentansprüche

1. Verfahren zur Kennzeichnung von Fahrzeugen zur Erschwerung von Diebstahl oder unbefugter Veräußerung, wobei am Fahrzeug Informationsträger mit Daten - Sekundärinformationen - dauerhaft angebracht werden, die normalerweise inhaltlich mit anderweitig niedergelegten, einer Manipulation nicht zugänglichen, über die Identität des Fahrzeuges Auskunft gebenden Informationen -Primärinformationen - übereinstimmen, wobei bei einer Abweichung der Sekundärinformation von der Primärinformation der Verdacht auf unrechtmäßigen Fahrzeugbesitz gegeben ist,
**dadurch gekennzeichnet**,
daß die die Sekundärinformationen tragenden Informationsträger gleichgestaltet und in im µm-Bereich liegender, mikroskopisch kleiner Form von Plättchen (7), die als geprägte Abschnitte einer dünnen Aluminium-Folie (12) ausgebildet werden, in vieltausendfacher Anzahl nach Art von Farbpigmenten in eine Fahrzeugbeschichtung (5),(6) zumindest an bestimmten Stellen eingelagert werden.

2. Verfahren zur Kennzeichnung von Fahrzeugen zur Erschwerung von Diebstahl oder unbefugter Veräußerung, wobei am Fahrzeug Informationsträger mit Daten - Sekundärinformationen - dauerhaft angebracht werden, die normalerweise inhaltlich mit anderweitig niedergelegten, einer Manipulation nicht zugänglichen, über die Identität des Fahrzeuges Auskunft gebenden Informationen -Primärinformationen - übereinstimmen, wobei bei einer Abweichung der Sekundärinformation von der Primärinformation der Verdacht auf unrechtmäßigen Fahrzeugbesitz gegeben ist,
**dadurch gekennzeichnet**,
daß die die Sekundärinformationen tragenden Informationsträger gleichgestaltet und in Form von Peptidketten, aus deren Zusammensetzungsweise die Sekundärinformationen entnommen werden, in vieltausendfacher Anzahl nach Art von Farbpigmenten in eine Fahrzeugbeschichtung (5), (6) zumindest an bestimmten Stellen eingelagert werden.

## Claims

1. Method of marking vehicles to hinder theft or unauthorized sale, information carriers being permanently applied to the vehicle with data - secondary information - which normally coincides in terms of content with information providing details on the identity of the vehicle - primary information - which is stored in some other way and is not accessible to manipulation, the suspicion of unlawful vehicle ownership existing if the secondary information deviates from the primary information, characterized in that the information carriers carrying the secondary information are incorporated in the manner of pigments into a vehicle coating (5), (6), at least at certain locations, identically in many thousands and in the microscopically small form, in the µm range, of platelets (7) which are formed as embossed sections of a thin aluminium foil (12).

2. Method of marking vehicles to hinder theft or unauthorized sale, information carriers being permanently applied to the vehicle with data - secondary information - which normally coincides in terms of content with information providing details on the identity of the vehicle - primary information - which is stored in some other way and is not accessible to manipulation, the suspicion of unlawful vehicle ownership existing if the secondary information deviates from the primary information, characterized in that the information carriers carrying the secondary information are incorporated in the manner of pigments into a vehicle coating (5), (6), at least at certain locations, identically in many thousands and in the form of peptide chains, from the mode of composition of which the secondary information is retrieved.

## Revendications

1. Procédé de marquage de véhicules pour rendre plus difficile le vol ou la vente illicite, selon lequel des supports d'information portant des données - constituant des informations secondaires - sont durablement posés sur le véhicule, données qui concordent normalement, quant à leur contenu, avec des informations - constituant des informations primaires - consignées ailleurs, non accessibles pour une manipulation, qui renseignent sur l'identité du véhicule, la divergence de l'information secondaire de l'information primaire donnant lieu à un soupçon de détention illégitime du véhicule,
caractérisé en ce que les supports d'information portant les informations secondaires sont réalisés avec la même conformation et sous la forme de plaquettes (7) microscopiquement petites, de l'ordre de grandeur de quelques micromètres, qui sont produites comme des portions empreintes d'une mince pellicule d'aluminium (12) et incorporées à raison de plusieurs milliers d'exemplaires à la façon de pigments colorés dans un revêtement de véhicule (5, 6) à des endroits déterminés au moins.

2. Procédé de marquage de véhicules pour rendre plus difficile le vol ou la vente illicite, selon lequel des supports d'information portant des données - constituant des informations secondaires - sont durablement posés sur le véhicule, données qui concordent normalement, quant à leur contenu, avec des informations - constituant des informations primaires - consignées ailleurs, non accessibles pour une manipulation, qui renseignent sur l'identité du véhicule, la divergence de l'information secondaire de l'information primaire donnant lieu à un soupçon de détention illégitime du véhicule,
caractérisé en ce que les supports d'information portant les informations secondaires sont réalisés avec la même conformation et sous la forme de chaînes peptidiques, du mode de composition desquelles sont tirées les informations secondaires, qui sont incorporées à raison de plusieurs milliers d'exemplaires à la façon de pigments colorés dans un revêtement de véhicule (5, 6) à des endroits déterminés au moins.
